# EUROPEAN PATENT APPLICATION

(11) **EP 3 301 618 A1**
(43) Date of publication of application: **04.04.2018**
(21) Application number: 17192495.4
(22) Date of filing: 21.09.2017
(51) Int. Cl.: G06N 5/00, G06Q 10/00

(54) **SYSTEM AND METHOD FOR GENERATING AND REPRESENTING A COST OPTIMIZED DIAGNOSTIC WORK PLAN**

(30) Priority: 30.09.2016 US 201615281425
(71) Applicant: Honeywell International Inc., Morris Plains, NJ 07950 (US)
(72) Inventor: LECHTENBERG, Kelly Jean, Morris Plains, NJ New Jersey 07950 (US); FELKE, Tim, Morris Plains, NJ New Jersey 07950 (US); HALL, Dirk, Morris Plains, NJ New Jersey 07950 (US)
(74) Representative: Houghton, Mark Phillip

(57) **Abstract**

The embodiments described herein can provide improved diagnostic repair systems and methods to generate and represent cost optimized work plans. These cost optimized work plans include a plurality of procedures, where each of the plurality of procedures represents at least one of a corrective action or test. The order and arraignment of these cost optimized work plans are arranged to have an optimized average cost of repair, and thus can reduce the costs associated with such repairs. Furthermore, these diagnostic repair systems and methods provide techniques for representing such a cost optimized work plan and guiding a user through such a cost optimized work plan. Specifically, separate graphical user interface elements are generated for each procedure in the cost optimized work plan, with the graphical user interface elements including features designed to guide a user through the procedures in a way that provides an optimized average cost of repair.

## Description

### TECHNICAL FIELD

Embodiments disclosed herein relate generally relates to complex system repair, and more specifically relates to generating diagnostic work plans in a condition-based health maintenance system.

### BACKGROUND

Increases in system complexity and the accompanying increase in maintenance costs have led to the creation of computer based diagnostic systems. In general, such systems are designed to provide maintenance and repair guidance based on sophisticated models of such complex systems and received data from the complex system.

For example, a typical diagnostic system can receive a variety of fault indicators, parametric values, process status and events, consumable usage and status, interactive data and the like. The system can analyze this data and determine a set of corrective actions designed to maintain or repair the complex system. These corrective actions can include a variety of tests and repairs on the complex system, with the goal of the corrective actions to efficiently maintain or repair the complex system.

One limitation in such systems has been inability to provide cost optimization of the repair procedure. As such, the average cost to repair such systems can be considerably higher than may be necessary. Thus, there remains a need for diagnostic systems that can reduce the average cost of performing repairs to complex systems.

Furthermore, other desirable features and characteristics of the present invention will become apparent from the subsequent detailed description of the invention and the appended claims, taken in conjunction with the accompanying drawings and this background of the invention.

### BRIEF SUMMARY

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

In general, the embodiments described herein provide diagnostic repair systems and methods to generate and represent cost optimized work plans. These cost optimized work plans include a plurality of procedures, where each of the plurality of procedures represents at least one of a corrective action or test. The order and arraignment of these cost optimized work plans are arranged to have an optimized average cost of repair. As such, when applied the cost optimized work plans can reduce the costs associated with such repairs.

Furthermore, these diagnostic repair systems and methods provide techniques for representing such a cost optimized work plan and guiding a user through such a cost optimized work plan. Specifically, separate graphical user interface elements are generated for each procedure in the cost optimized work plan, with the graphical user interface elements including features designed to guide a user through the procedures in a way that provides an optimized average cost of repair.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 is a schematic diagram of a diagnostic repair system in accordance with an exemplary embodiment;
FIG. 2 is a flow diagram illustrating a method for generating a work plan in accordance with an exemplary embodiment;
FIG. 3 is a flow diagram illustrating a method for cost optimizing a work plan in accordance with an exemplary embodiment;
FIG. 4 is a schematic diagram of graphical representation of an optimized work plan in accordance with an exemplary embodiment;
FIG. 5 is a schematic diagram of graphical user interface element in accordance with an exemplary embodiment; and
FIG. 6 is a schematic diagram of a diagnostic repair system in accordance with an exemplary embodiment.

### DETAILED DESCRIPTION

In general, the embodiments described herein provide diagnostic repair systems and methods to generate and represent cost optimized work plans. These cost optimized work plans include a plurality of procedures, where each of the plurality of procedures represents at least one of a corrective action or test. The order and arraignment of these cost optimized work plans are selected to result in an optimized average cost of repair. Thus, such cost optimized work plans can be generated and used to reduce the costs associated with such repairs.

Furthermore, the embodiments described herein provide techniques for graphically representing such a cost optimized work plan and guiding a technician through the use of such a cost optimized work plan. Specifically, separate graphical user interface elements are generated for each procedure in the cost optimized work plan, with the graphical user interface elements including features designed to guide a user through the procedures in a way that provides an optimized average cost of repair.

The diagnostic repair system can be adapted to facilitate cost effective repair of any type of complex system. For example, the diagnostic repair system can be adapted to facilitate repair of any type of vehicle, aircraft, manufacturing process, or machine that may utilize sensors, transducers or other data sources to monitor the various components and parameters of the complex system.

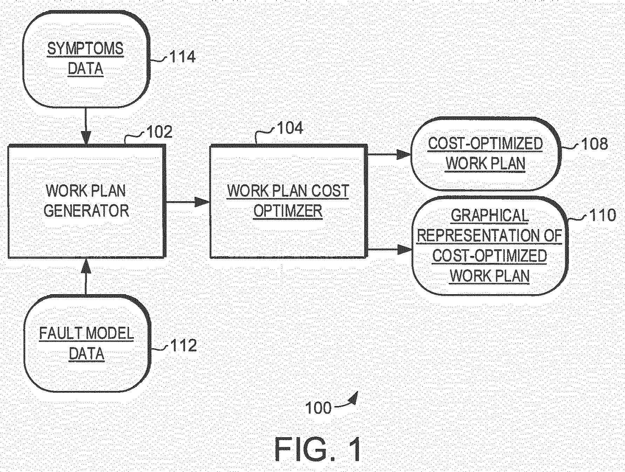

Turning now to FIG. 1, an exemplary diagnostic repair system 100 is illustrated. The diagnostic repair system 100 includes a work plan generator 102 and a work plan cost optimizer 104. The work plan generator 102 and the work plan cost optimizer 104 are configured to generate a cost optimized work plan 108. Additionally, the work plan cost optimizer 104 is configured to generate a graphical representation of the cost optimized work plan 110. To facilitate this, the work plan generator 102 receives fault model data 112 and symptoms data 114.

In general, the symptoms data 114 are the symptoms received from the complex system under repair, and can include any type of symptom, including operating parameters and various types of sensor data. The fault model data 112 in general provides a model of the system under repair and includes information on the possible failure modes, the symptoms of the various failure modes, the rate of occurrences of symptoms and the associated failure modes, and various cost information (e.g., the costs for various tests and repairs). The fault model data 112 can also include repair data that indicates how particular failure modes can be repaired including, the cost of such repairs.

When generated, the cost optimized work plan 108 defines an arrangement of procedures, where the arrangement determines the order in which the procedures are performed to optimize the average cost to repair. Specifically, the cost optimized work plan 108 includes a plurality of points, with the plurality of points arranged in branches from a root point to a plurality of end points. At each point, the cost optimized work plan 108 identifies a procedure, where the procedure can represent a corrective active or a test. These points and the associated procedures are arranged (e.g., ordered) to result in an optimized average cost to repair.

The graphical representation of the cost optimized work plan 110 is generated by the work plan cost optimizer 104 to facilitate the use of the cost optimized work plan in a repair. To facilitate this, the graphical representation of the cost optimized work plan 110 includes a separate graphical user interface elements for each procedure in the cost optimized work plan 108. In one embodiment, the plurality of separate graphical user interface elements are arranged and displayed in a logical tree with a first graphical user interface element corresponding to a first procedure associated with a root point displayed in an upper corner, and remaining of the separate graphical user interface elements arranged and displayed in rows and columns down to the plurality of end points.

Furthermore, in one embodiment the separate graphical user interface elements can each include a user modifiable field. These user modifiable fields can facilitate the receiving of inputs into the diagnostic repair system 100 during repair a process. For example, such a user modifiable field can be configured for a repair technician to indicate that a corresponding procedure has been completed. Furthermore, such a user modifiable field can be configured to record results of corresponding procedures. For example, such fields can be configured to record if a corrective action has been successful. As another example, such fields can be configured to record the results of a test. In other embodiments, the separate graphical user interface elements can each include an input element configured to open a document or video corresponding to the procedure.

A variety of techniques can be used by the diagnostic repair system 100 to generate the cost-optimized work plan 108. As a general example, the work plan generator 102 can build a work plan that includes a plurality of points, with the plurality of points arranged in branches, with each branch defining an ordered set of points. The generation of the work plan starts at root point and continues down each branch to a plurality of end points. Specifically, at each point a symptom signature is used to identify possible failure modes associated with that symptom signature. Corrective actions and/or tests associated with the identified possible failure modes are then added to the point. New points are then added to the work plan for the possible outcomes of the corrective actions and/or tests, and the process is repeated until the end points are reached for each branch of the work plan.

With such a work plan generated, the work plan cost optimizer 104 can then generate the cost optimized work plan 108 by calculating an average cost to repair for each procedure at each point, and then selecting the subset of points that results in the lowest average cost of repair. This subset of points defines a cost optimized work plan 108 that can be presented to the repair technician in the form of the graphical representation of the cost optimized work plan 110.

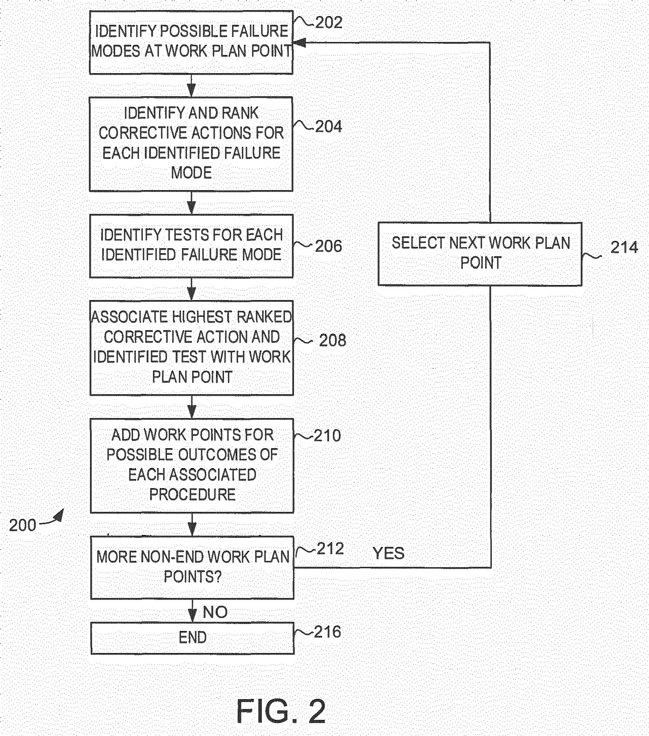

Turning now to FIG. 2, a method 200 for generating a work plan is illustrated. The method 200 is exemplary of the type of technique that can be used to generate a work plan that can then be cost optimized in later processing.

In general, the method 200 is performed for each point in the work plan, beginning at the root point and continuing to each of the end points in the work plan. Thus, for each corresponding point, beginning at the root point, the first step 202 is to identify possible failure modes in the complex system for the corresponding point based on a symptom signature at the corresponding point. In general, this involves comparing the set of currently known symptoms (i.e., the symptom signature) to known failure modes, and determining which failure modes can be indicated by the current symptom signature.

The next step 204 is to identify and rank corrections for each identified failure mode. Each failure mode will have one or more corrective actions that can be used to repair the failure associated with the failure mode. The ranking of these corrective actions can be done by cost. For example, the corrective actions can be ranked according to a repair cost index, where the repair cost index comprises the cost of the corrective action divided by the probability that the corrective action will correct the failure mode.

The next step 206 is to identify tests for each identified failure mode. In this step, tests that can provide additional symptoms and information associated with a failure mode are identified. It should be noted that in this step a plurality of tests can be identified.

The next step 208 is to associate the highest ranked corrective action and the identified tests with the current work plan point. The highest ranked corrective action and identified tests are thus the procedures that are associated with the current work plan point.

The next step 210 is to add a new work plan points for each of the possible outcomes of the associated procedures. Thus, a new point is added for the possible outcomes of each test and for the each possible outcome of the highest ranked corrective actions. When multiple plan points are added as possible outcomes, this adds new branches to the work plan. It should be noted that in some cases the outcome of procedure will be successful repair of the failure mode, and the points that correspond to those outcomes will be end points in the work plan.

In the next step 212 it is determined if there are more non-end points in the work plan. If there are more non-end points the method 200 moves to step 214, where the next work plan point is selected. Steps 202 -210 can then be performed for the next work plan point. It should be noted that in performing steps 202-210 for the next work plan point that the results of the any newly performed tests and corrective actions provides new symptom data, and thus a new symptom signature can be used and new failure modes identified. These new failure modes can then have new associated corrective actions and tests. Thus, the process can continue to identify tests and corrective actions and add new work plan points for the possible outcomes of these new tests and corrective actions. This process continues until each branch has reached an end point, and then with all the branches have reached an end point the method 200 ends at step 216.

Thus, the method 200 creates a work plan that comprises a plurality of points. Each point includes one or more procedures (i.e., tests and corrective actions) that are associated with that point. The work plan thus comprises a tree of points, where the tree begins at a root point and expands through a plurality of branches to a plurality of end points.

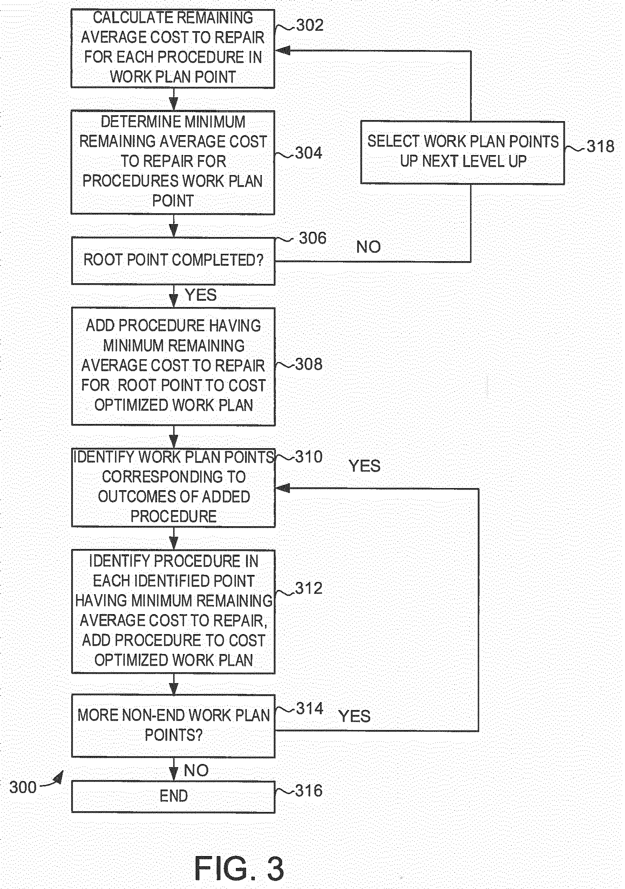

With such a work plan generated, the work plan cost optimizer 104 can then generate the cost optimized work plan 108. Turning now to FIG. 3, a method 300 for generating a cost optimized work plan is illustrated. In general, the method 300 operates by calculating an average cost to repair for each procedure at each point, and then selecting the subset of points that results in the lowest average cost of repair. Specifically, the method 300 begins at the plurality of end points in the work plan and works towards to root point while calculating the minimum remaining average cost to repair of each procedure. Upon reaching the root point, the method works back down to the end points while identifying the procedures in each work plan point having the minimum average cost to repair and adding those procedures to the cost optimized work plan.

At step 302 in method 300, the remaining average cost to repair is calculated for each procedure in the work plan point. Step 302 starts at the end points in the work plan, but it should be noted that at the end points the remaining average cost would be zero, and thus step 302 can first be performed for the work points that are one level above the end points.

In one embodiment, step 302 can be performed by calculating a factored cost of each procedure and adding a sum of minimum remaining average cost of repairs for procedures that correspond to outcomes of that procedure. In this technique, the factored cost of a procedure can be the cost of the procedure times the likelihood of performing the procedure.

With the remaining average costs to repair determined for each procedure in a work plan point, the next step 304 is to determine a minimum remaining average cost to repair for the all the procedures at that point. In this step, the minimum remaining average cost to repair can be calculated by setting the minimum remaining average costs for end points in the plurality of points to zero, and determining a lowest remaining average cost to repair for all procedures in a point for other points in the plurality of points that are not end points.

Next, a step 306 it is determined if the minimum remaining average cost to repair for the root point has been calculated. If not, the method moves to step 318, and work plan points one level up are selected. The steps 302 and 304 can then be completed for the newly selected work plan points. This process continues until the minimum remaining average cost to repair for all points, including the root point, have been calculated. The method 300 then moves to the step 308, where the procedure having the minimum remaining average cost to repair for the root point is added to the cost optimized work plan. In doing so, step 308 adds the first procedure to the cost optimized work plan.

The next step 310 is to identify the work plan points that correspond to outcomes of the added procedure. When first being performed, the step 310 identifies the work plan points that are the outcomes of the procedure selected in the root point. Then, at step 312 the procedure in each identified work plan point having minimum remaining average cost to repair for that work plan is identified and added to the cost optimized work plan. Again, when first performed step 312 identifies the procedures that correspond to outcomes of the root point having minimum remaining average cost to repair.

At step 314 it is determined if there are more non-end work plan points for which minimum average cost procedures need to be identified. If yes, the method 300 returns to step 310 where work plan points that correspond to outcomes of the procedure added in step 312 are identified. Then, at step 312 the procedure in each identified work plan point having minimum remaining average cost to repair for that work plan point is again identified and added to the cost optimized work plan. This process continues until a procedure having minimum remaining average cost to repair for that work plan point is identified added to the cost optimized work plan for all non-end points in the work plan. The processes then moves to step 316.

Thus, the method 300 continues to identify points corresponding to the outcomes of identified procedures, identify procedures associated with those identified points that have a minimum remaining average cost to repair and add those identified procedures to the cost optimized work plan until the plurality of end points are reached. The result is a cost optimized work plan, where the order and arraignment of these cost optimized work plan is selected to result in an optimized average cost of repair. Furthermore, it should be noted that the calculated minimum remaining average cost to repair for the root point provides an average cost estimate for performing the cost optimized work plan.

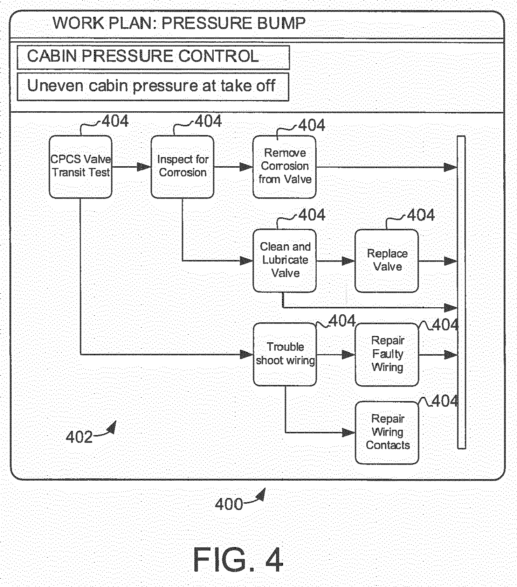

Returning to FIG. 1, as was noted above, the work plan cost optimizer 104 can be further configured to facilitate the use of the cost optimized work plan in a repair by generating a graphical representation of the cost optimized work plan 110. Turning now to FIG. 4, an exemplary user interface 400 is illustrated. The user interface 400 includes a graphical representation 402 of a cost optimized work plan. This graphical representation 402 includes separate graphical user interface elements 404 for each procedure in the cost optimized work plan. In this illustrated embodiment, the plurality of separate graphical user interface elements 404 are arranged and displayed in a logical tree. Specifically, a first graphical user interface element 404 corresponding to a first procedure associated with a root point is displayed in the upper left corner. The procedures associated with outcomes of the root point are then arranged in branches that extend in rows and columns to a plurality of end points. In such a representation the most likely repair procedure can correspond to the top row of interface elements 404.

Such a graphical representation 402 of the cost optimized work plan can guide a user (e.g., a repair technician) through a repair in a way that leads to cost optimization. Thus, when one test or corrective action is performed the graphical representation 402 will guide the repair technician to the next test or corrective action. The repair technician can thus easily follow the cost optimized work plan. And as described above, performing the cost optimized work plan according to the graphical representation 402 will result in a reduced average cost of repair, and thus can reduce the resources required to make such repairs.

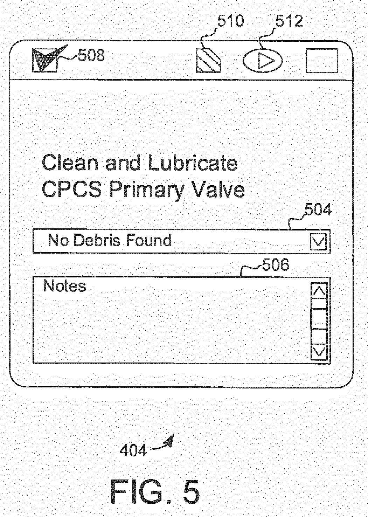

Turning now to FIG. 5, a detailed example of an interface element 404 is illustrated. In this detailed example, the interface element 404 represents a corrective action, but it should be noted that an interface element for a test can include similar features. In this illustrated example, the exemplary interface element 404 corresponds to a corrective action of "Clean and Lubricate CPCS Primary Valve". To facilitate the performance of this corrective action, the exemplary interface element 404 includes several user modifiable fields. Specifically, the user modifiable field 504 is a drop down menu that allows a user to select and enter the results of performing the corrective action, and thus can be used to provide those results to the diagnostic repair system.

The user modifiable field 506 is a text entry field that allows a user to enter notes associated with the corrective action. Finally, the user modifiable field 508 is a check box that allows a user to indicate that the corrective action has been performed.

In addition to these user modifiable fields, the interface element 404 includes other exemplary interface features that allow a user to access related materials. Specifically, interface feature 510 is a button that when activated will retrieve a document that provides information relevant to the associated corrective action. For example, the document can describe details of the corrective action or provide new and updated instructions. Likewise, the interface feature 512 is a button that when activated will play a video relevant to the associated corrective action. For example, a video can be played that demonstrates the correct technique to perform the corrective action. Thus, the interface features 510 and 512 can be used to easily retrieve related materials and can thus facilitate performance of the cost optimized work plan.

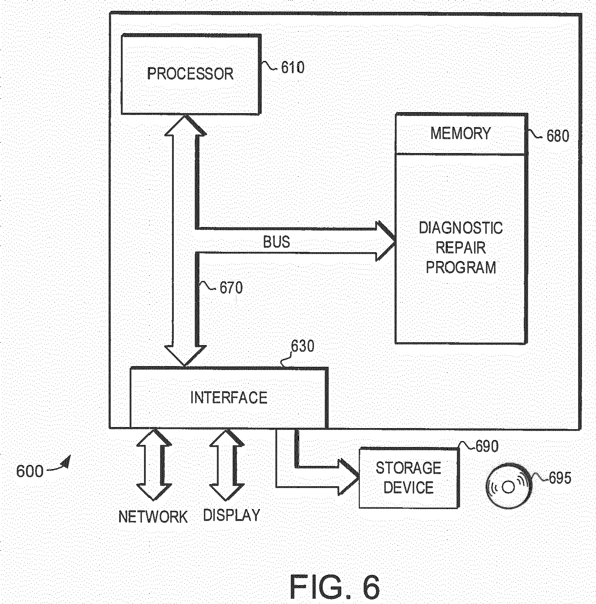

Such a diagnostic repair system (e.g., diagnostic repair system 100 of FIG. 1) can be implemented on a wide variety of platforms. Turning now to FIG.6, an exemplary processing system 600 is illustrated. Processing system 600 illustrates the general features of a processing system that can be used to implement such a repair system. Of course, these features are merely exemplary, and it should be understood that the invention can be implemented using different types of hardware that can include more or different features. It should be noted that the processing system 600 can be implemented in many different environments, such as in a remote repair station. The exemplary processing system 600 includes a processor 610, an interface 630, a storage device 690, a bus 670 and a memory 680. In accordance with the embodiments of the invention, the memory 680 includes a diagnostic repair program configured to generate and display a cost optimized work plan. Specifically, the diagnostic repair program can be adapted to generate and represent cost optimized work plans, where the order and arraignment of these cost optimized work plans are selected to result in optimized average cost of repair.

The processor 610 performs the computation and control functions of the system 60. The processor 610 may comprise any type of processor, include single integrated circuits such as a microprocessor, or may comprise any suitable number of integrated circuit devices and/or circuit boards working in cooperation to accomplish the functions of a processing unit. In addition, processor 610 may comprise multiple processors implemented on separate systems. In addition, the processor 610 may be part of a larger repair or diagnostic system. During operation, the processor 610 executes the programs contained within memory 680 and as such, controls the general operation of the processing system 600.

Memory 680 can be any type of suitable memory. This would include the various types of dynamic random access memory (DRAM) such as SDRAM, the various types of static RAM (SRAM), and the various types of non-volatile memory (PROM, EPROM, and flash). It should be understood that memory 680 may be a single type of memory component, or it may be composed of many different types of memory components. In addition, the memory 680 and the processor 610 may be distributed across several different physical devices that collectively processing system 60. For example, a portion of memory 680 may reside on a vehicle communication system computer, and another portion may reside on repair system computer.

The bus 670 serves to transmit programs, data, status and other information or signals between the various components of processing system 600. The bus 670 can be any suitable physical or logical means of connecting computer systems and components. This includes, but is not limited to, direct hard-wired connections, fiber optics, infrared and wireless bus technologies. It should also be noted that the processing system 600 could be implemented as a single system on a chip (SoC). In such a case the bus 670 can comprise the internal bus of the SoC.

The interface 630 allows communication to the processing system 600, and can be implemented using any suitable method and apparatus. It can include a network interfaces to communicate to other systems, terminal interfaces to communicate with technicians, and storage interfaces to connect to storage apparatuses such as storage device 690. Storage device 690 can be any suitable type of storage apparatus, including direct access storage devices such as hard disk drives, flash systems, floppy disk drives and optical disk drives. As shown in FIG. 6, storage device 190 can comprise a disc drive device that uses discs 695 to store data.

In accordance with the embodiments described herein, the processing system 600 includes a diagnostic repair program. Thus during operation, these program elements are stored in the memory 680 and executed by processor 610.

It should be understood that while the present invention is described here in the context of a fully functioning computer system, those skilled in the art will recognize that the mechanisms of the present invention are capable of being distributed as a program product in a variety of forms, and that the embodiments described herein apply equally regardless of the particular type of recordable media used to carry out the distribution. Examples of recordable media include: magnetic disks, flash memory devices, hard drives, memory cards and optical disks (e.g., disc 695).

The foregoing description of specific embodiments reveals the general nature of the inventive subject matter sufficiently that others can, by applying current knowledge, readily modify and/or adapt it for various applications without departing from the general concept. Therefore, such adaptations and modifications are within the meaning and range of equivalents of the disclosed embodiments. The inventive subject matter embraces all such alternatives, modifications, equivalents, and variations as fall within the spirit and broad scope of the appended claims.

The forgoing detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

Techniques and technologies may be described herein in terms of functional and/or logical block components and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

For the sake of brevity, conventional techniques related to aircraft data communication systems, and other functional aspects of certain systems and subsystems (and the individual operating components thereof) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter. Although not always required, the techniques and technologies described here are suitable for use by any aircraft, ground control system, or other communication system.

## Claims

1. A diagnostic repair system comprising:
a processor;
a memory coupled to the processor;
a diagnostic work plan program residing in the memory and being executed by the processor, the diagnostic work plan program configured to:
generate a cost optimized work plan that includes a plurality of procedures, each of the plurality of procedures representing a corrective action or a test, and wherein the cost optimized work plan is arranged to have an optimized average cost to repair; and
generate a graphical representation of the cost optimized work plan for display on a display screen, wherein the graphical representation of the cost optimized work plan includes separate graphical user interface elements for each procedure in the cost optimized work plan.

2. The diagnostic repair system of claim 1, wherein the diagnostic work plan program is configured to generate the cost optimized work plan by:
A) generating a plurality of points, the plurality of points including a root point and logically connected via branches to a plurality of end points, and wherein each of the plurality of procedures is associated with one of the plurality of points;
B) beginning at each of the plurality of end points and continuing toward the root point, calculating a remaining average cost to repair for each of the plurality of procedures in an associated point; and
C) beginning at the root point and continuing toward the plurality of end points, adding procedures having a minimum remaining average cost to repair for their associated point and corresponding to outcomes of procedures having a minimum remaining cost to repair for their associated point to the cost optimized work plan.

3. The diagnostic repair system of claim 2, wherein the calculating the remaining average cost to repair for each of the plurality of procedures in an associated point comprises calculating a factored cost of a the procedure and adding a sum of minimum remaining average cost of repairs for procedures that correspond to outcomes of the procedure.

4. The diagnostic repair system of claim 2, wherein the diagnostic work plan program is further configured to determine the minimum remaining average cost to repair by setting the minimum remaining average costs for end points in the plurality of points to zero and determining a lowest remaining average cost to repair for all procedures in a point for other points in the plurality of points that are not end points.

5. The diagnostic repair system of claim 2, wherein the generating the plurality of points comprises, for each corresponding point in the plurality of points, and beginning at the root point:
A) identifying possible failure modes for the corresponding point based on a symptom signature at the corresponding point;
B) identifying and ranking corrective actions based on the identified possible failure modes, the ranking determining a highest ranked corrective action;
C) identifying tests based on the identified possible failure modes;
D) associating a procedure with the corresponding point for each identified test;
E) associating a procedure with the corresponding point for the highest ranked corrective action;
F) adding a point to the plurality of points for each outcome of the identified tests and each outcome of the highest ranked corrective action; and
G) repeating steps A) through F) for each of the added points of the plurality of points with one of the added points of the plurality of points as the corresponding point, with the repeating continuing until each added point is an end point.

6. The diagnostic repair system of claim 1, wherein the separate graphical user interface elements are arranged in a tree with a first graphical user interface element associated with first procedure in the plurality of procedures displayed in an upper corner and other of the separate graphical user interface elements corresponding to remaining recommended procedures arranged along a top row of the display screen.

7. A diagnostic repair method, comprising:
generating a cost optimized work plan that includes a plurality of procedures, each of the plurality of procedures representing a corrective action or a test, and wherein the cost optimized work plan is arranged to have an optimized average cost to repair; and
generating a graphical representation of the cost optimized work plan for display on a display screen, wherein the graphical representation of the cost optimized work plan includes separate graphical user interface elements for each procedure in the cost optimized work plan.

8. The method of claim 7, wherein the generating the cost optimized work plan comprises:
A) generating a plurality of points, the plurality of points including a root point and logically connected via branches to a plurality of end points, and wherein each of the plurality of procedures is associated with one of the plurality of points;
B) beginning at each of the plurality of end points and continuing toward the root point, calculating a remaining average cost to repair for each of the plurality of procedures in an associated point; and
C) beginning at the root point and continuing toward the plurality of end points, adding procedures having a minimum remaining average cost to repair for their associated point and corresponding to outcomes of procedures having a minimum remaining cost to repair for their associated point to the cost optimized work plan.

9. The method of claim 8, wherein the generating the plurality of points comprises, for each corresponding point in the plurality of points, and beginning at the root point:
A) identifying possible failure modes for the corresponding point based on a symptom signature at the corresponding point;
B) identifying and ranking corrective actions based on the identified possible failure modes, the ranking determining a highest ranked corrective action;
C) identifying tests based on the identified possible failure modes;
D) associating a procedure with the corresponding point for each identified test;
E) associating a procedure with the corresponding point for the highest ranked corrective action;
F) adding a point to the plurality of points for each outcome of the identified tests and each outcome of the highest ranked corrective action; and
G) repeating steps A) through F) for each of the added points of the plurality of points with one of the added points of the plurality of points as the corresponding point, with the repeating continuing until each added point is an end point.

10. The method of claim 7, wherein the separate graphical user interface elements are arranged in a tree with a graphical user interface element associated with a first procedure in the plurality of procedures displayed in a corner and remaining of the separate graphical user interface elements arranged in rows and columns.
